# EUROPEAN PATENT SPECIFICATION

(11) **EP 2 958 416 B1**
(45) Date of publication and mention of the grant of the patent: **17.10.2018**
(21) Application number: 14711140.5
(22) Date of filing: 10.02.2014
(51) Int. Cl.: A01C 7/20, A01C 15/00

(54) **AGRICULTURAL MACHINE FOR SOWING OR THE APPLICATION OF FERTILIZER**
LANDWIRTSCHAFTLICHE MASCHINE ZUM SÄEN ODER ZUM AUFTRAGEN EINES DÜNGEMITTELS
MACHINE AGRICOLE POUR SEMER OU ÉPANDRE DE L'ENGRAIS

(30) Priority: 22.02.2013 CZ 20130134
(43) Date of publication of application: 30.12.2015
(73) Proprietor: Farmet A.S., 55203 Ceská Skalice (CZ)
(72) Inventor: Nýc, Michal, 54941 (CZ)
(74) Representative: Skoda, Milan
(86) International application number: PCT/CZ2014/000016
(87) International publication number: WO 2014/127753

(56) References cited:
- EP-A1- 2 232 975
- DE-A1-102008 027 065
- FR-A1- 2 687 622

## Description

### Technical Field

The invention relates to an agricultural machine for sowing or the application of fertilizer with at least one longitudinal hopper and at least one central metering device.

### State of the Art

Currently, there are many constructions of sowing machines and machines for precision application of fertilizer known. These machines mostly consist of an exterior metering device and hopper. According to the type of machine, these are arranged longitudinally or transversely to the direction of travel. Other common features of these machines are different agro-technical devices, such as various soil cultivators, with all these components typically mounted on the frame structure.

From the patent document EN 108 096 a working frame is known with a central seed container and working tools whose working width when engaged in the soil is greater than its transport width. The working frame is divided by wheels where the separate parts are carried by the supporting frame with hinged axles set before the wheels, and the outer frames pivot up from the working position to a parallel position for transport. This type of sowing machine is of a relatively primitive construction, and it cannot be used for modern productive sowing. The arrangement of the frame structure is markedly unstable, and this design could certainly not support the higher weight load of modern sowing machines.

From the patent document CZ 290177 a windrow sowing machine is known with at least one seeding ploughshare, notably a double-disc seeding ploughshare with an attached pressurized cylinder, which are connected as a unit by a four-jointed mechanism to the transverse frame which is, by the four-jointed mechanism connected to the frame of the sowing machine or the seed hopper. Suspension arms with an additional four-jointed mechanism can be adjusted to different positions by means of a setting device or adjusting equipment which are in either a mutually parallel or convergent position. The frame of this sowing machine is arranged transversely. This arrangement is only applicable to less productive and less accurate sowing machines of the mechanical vibration sort. It is not possible to position pneumatic metering equipment as used in modern highly productive machines in such a frame due to space.

From European patent EP 1618776 a sowing machine is known with a frame, a hopper and fan dispenser, which is driven by a drive wheel traveling on the soil via a drive shaft line, wherein the drive wheel in the working position is arranged laterally next to the frame and the sowing components. The drive wheel is simultaneously connected by an articulated support arm of the frame moving in a vertical plane by means of a swivel pin with a horizontal axis of rotation, and the pivot pin has an offset lead, which allows movement transversely to the driving direction. Even in this case the frame is mounted transversely and so this sowing machine has the same drawbacks as the previous sowing machine described in CZ 290177.

From the next European patent EP 1815730 a sowing machine is known which comprises a frame which carries a hopper designated for grain to be sown. This sowing machine comprises tandem axles to the tractor in the front of its frame set independent of each other and the arms are arranged longitudinally side by side, roughly horizontally below the frame. Also this machine comprises a transversely mounted seed container as a hopper which is arranged on a simple but torsionally unstable frame, which again does not allow higher performance of the sowing machine as a whole.

From patent application CZ PV 2001-3263 a further sowing machine is known which consists of a frontal frame which rests on the ground on a wheel , and a rear frame which carries the sowing device that sets the seed in the ground. The rear frame is connected to the front frame by a central articulated joint whose axle is at least approximately vertical. The machine also carries a levelling device allowing the rear frame to be levelled with the front frame when the sowing device leaves the ground. This is a case of a machine which is relatively productive, but whose frame is quite complex and heavy, and whose torsional stability is not guaranteed which lowers not only precision of sowing but the shorter lifespan of the whole sowing machine.

From patent application DE102008027065 is known the seeder which has a front frame coupled to a towing device of a tractor via a traction coupler. The seed coulters are arranged at a blade bar extending transverse to a driving direction. The external dimensions of a storage container are shifted and matched in a range of space dimensions provided by an International Standardization Organization (ISO) container. The storage container is provided with the frame elements.

From prior state of the art metering machines are also known which have longitudinally mounted containers for seed or fertilizer. These machines usually have a transport axle or row of wheels by which the machine moves during transport or works which are mounted on a separate frame which is, by axle or other coupling device directly connected to the towing means, usually a tractor. A hopper for seed or fertilizer is mounted on this separate or on an intermediate frame. This hopper usually has no substantial supporting design function and is used exclusively for carrying seed or fertilizer. The disadvantage of this type of metering device is their higher weight and higher complexity of production, which is why these machines are quite expensive. Another drawback is the above mentioned lower torsional strength. In use, the major drawback is that the main frame takes up more space, which impairs the use of space for construction.

From the above noted state of the art, it is indicated that the main drawback of currently known metering machines is that if they have a transversely mounted hopper, then they are unproductive and do not allow for precise sowing and, where the hopper is mounted longitudinally and comprise a frame which has low torsional rigidity which takes up space requirements, then it is usually quite heavy, complex to manufacture and therefore relatively expensive.

The aim of the invention is a design of a productive sowing machine with a longitudinally mounted hopper which is, as a whole, torsionally solid, will have both a light and simple design for production, and so lowering its production costs as well.

### Principle of the Invention

These deficiencies are largely removed and the objective of the invention is fulfilled by an agricultural machine according to claim 1 for sowing or the application of fertilizer with at least one longitudinal hopper and at least one central metering device; the longitudinal hopper is a basic supporting part of the whole machine and is arranged to be self-supporting, with a device for connecting to the towing device arranged at its front end and with at least one means of support and at least one distribution device arranged at its back end, and the longitudinal hopper is arranged to be torsionally rigid, while the longitudinal hopper is made of flat segments which are solidly connected to each other, the longitudinal hopper comprises at least one coupling element, to which is mounted at least one working part of the agricultural machine and/or a section of the working part of the agricultural machine.

The design solution is to use large vertical and longitudinal sidewalls for the hopper which by their large structural height give high torsional rigidity to the hopper given its design solution using a partially closed profile. Such a design ensures sufficient strength and torsional rigidity without the use of traditional tubular frames. The hopper is arranged to be torsionally rigid and is a basic supporting part of the whole agricultural machine. The main advantages of the design solution according to this invention are: lower weight of the sowing or fertilizing machines, higher torsional rigidity, a simpler design with lower production costs, and smaller space requirement for installation. A sowing machine according to this invention makes it possible to attain improved operating parameters, especially lower fuel consumption, improved work performance and better accessibility to the adjustment nodes for the operator.

The hopper is configured to be torsionally rigid, while the hopper is made of flat segments which are solidly connected to each other. This arrangement is relatively easy to construct, and configuring the hopper to be torsionally rigid significantly reduces wear on other parts of the agricultural machine.

Torsional rigidity is further increased when the self-supporting hopper comprises at least one transverse internal wall. This solution provides another advantage: the possibility to create at least one additional hopper cavity in which is located at least one chamber and at least one metering device for accurate dispensing of the seed and/or fertilizer.

For optimal and stable attachment of other parts of the agricultural machine, the self-supporting hopper comprises at least one coupling element, on which at least one working part of the agricultural machine and/or a section of the working part of the agricultural machine is mounted.

In advantageous arrangement, on the hopper at least one means of support is suspended, there is at least one section of the application device, and arranged at the front of the hopper there is a connecting device.

It is to further advantage if the agricultural machine comprises at least one additional agro-technical component suspended at the front of the hopper, which is preferably at least one disc and / or blades of a pretreatment section and/or a harrow.

The advantage of the machine according to the invention is that classical main frame of similar devices known from prior state of the art is replaced by a self-supporting hopper, which serves as the principal load-bearing element of the whole agricultural machine. The hopper is designed to be spatial, self-supporting, and torsionally rigid.

At the front of the agricultural machine a connecting device is attached, and at the back part of the hopper a means of support and the working parts with seeding coulters, or any other sowing or dispensing equipment are mounted. Between the connecting device, the means of support and the parts of the seeding coulters there is no connecting frame, and the self-supporting hopper for seed and / or fertilizer acts as the main load bearer.

Using a self-supporting hopper as the main load bearing element of the agricultural machine offers many advantages. The whole agricultural machine, for example, has significantly lower weight, saving fuel for the towing means. A very significant advantage is the less complex structure, which brings lower production costs of the whole machine. Another advantage is significantly increased solidity of the frame in the form of a self-supporting hopper, which brings the possibility of increasing the operating speed of the agricultural machine, and also reduces stress and so wear and tear of most of its functional parts, which allows the warrantee of the whole machine to be extended. Increased rigidity of the frame also allows for increased precision of metering and / or depositing of seed and / or soil fertilizer. Another important advantage of the self-supporting hopper construction is the possibility of a modular construction of the whole machine, resulting in a further reduction in production costs, and the possibility of more design variations for the customer, from which the possibility of higher profits for the manufacturer ensues.

### Overview of the Figures

The invention will be further elucidated using drawings, in which Fig. 1 shows an axonometric view of the overall arrangement of an agricultural machine for sowing or the application of fertilizer, Fig. 2 shows a side view of the overall arrangement of an agricultural machine for sowing or the application of fertilizer, and Fig. 3 shows an axonometric cross sectional view of the overall arrangement of an agricultural machine for sowing or the application of fertilizer.

### Example of the Performance of the Invention

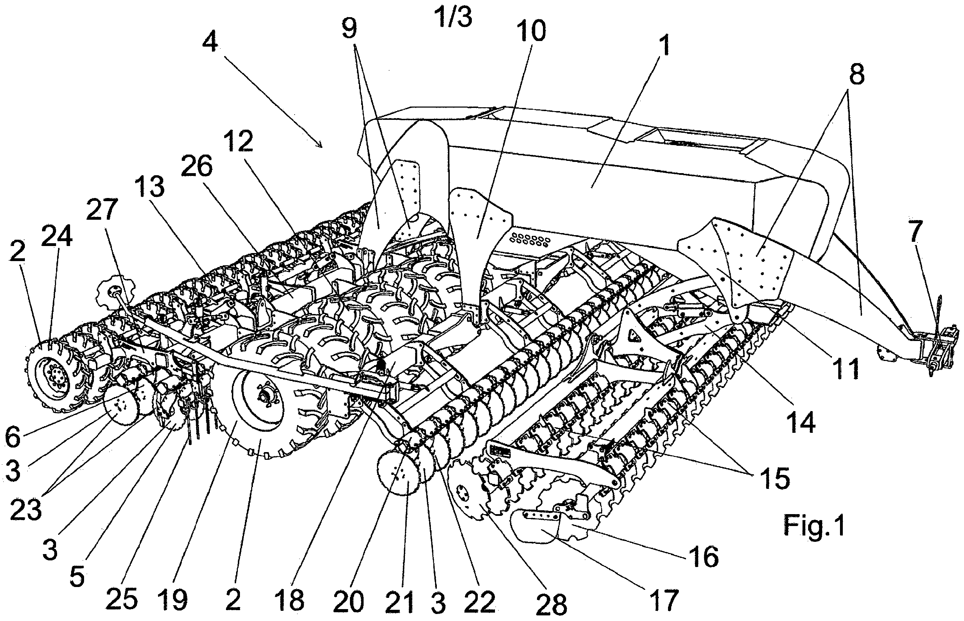

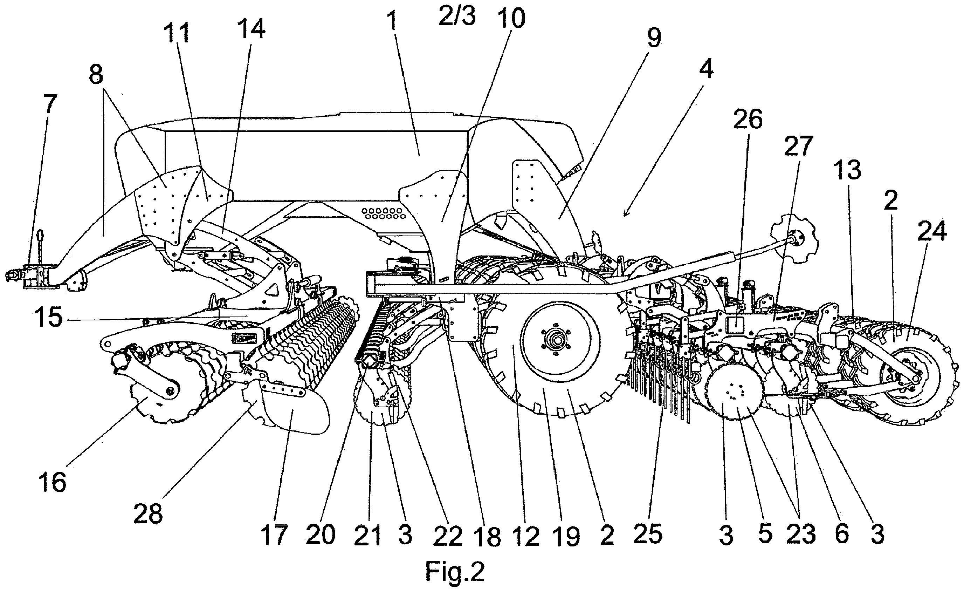

An agricultural machine 4 for sowing or the application of fertilizer (Fig. 1, Fig. 2, Fig. 3) comprising a longitudinal hopper 1 with a central metering device not shown. The longitudinal hopper 1 is a basic support part of the machine and is arranged to be self-supporting.

The hopper 1 comprises means 2 of support which are arranged in sections 12 on the means 2 of support consisting of two traverse tyres 19 of a pneumatic cylinder and a section 13 of the means 2 of support consisting of two rear duplicating and packing wheels 24, and the distribution device 3 for seed and/or fertilizer, which are mounted onto the front section 5 of the distribution device 3 and the back section 6 of the distribution device 3, with this distribution device 3 are sowing disc coulters 23, a section 22 of the distribution device 3, with this distribution device 3 are disc coulters 21 for the application of fertilizer.

The longitudinal hopper 1 is configured as self-supporting carrying a number of working parts of the agricultural machine 4 or sections of the working parts of the agricultural machine 4. The longitudinal hopper 1 is torsionally rigid, and is the only and primary load bearing part of the whole agricultural machine 4.

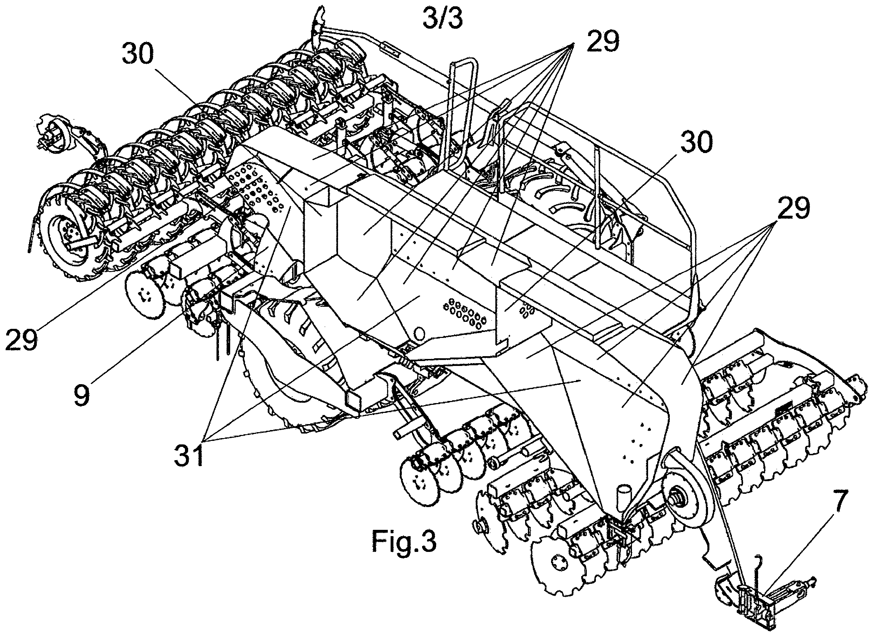

The longitudinal hopper 1 (Fig. 3) is made of flat segments 29 which are solidly connected to each other by welding, and comprises two lateral internal walls 30 which form three chambers 31 in which are arranged hoppers and a metering device for precise distribution of seed and/or fertilizers.

At the front part of the longitudinal hopper 1 is mounted, by help of a pair of coupling elements 8, a hitching device 7, which is a drawbar.

At the front part of the longitudinal hopper 1 is an additional pair of coupling elements 11 which attach, by a parallelogram linkage 14, the frame 15 of pretreatment sections, on which are arranged a front section of disks 16 of the pretreatment section and a rear section of disks 28 of the pretreatment section and a side deflector 17 against eject soil to the side.

At the middle part of the longitudinal hopper 1 is mounted, by help of a pair of coupling elements 10, a frame 18 on which is mounted a support frame 20 of disc coulters 21 for application of fertilizers.

At the back part of the longitudinal hopper 1 is mounted, by help of a pair of coupling elements 9 a frame 26 on which are arranged sections 12 of a means of support 2 consisting of traverse tyres 19 of the pneumatic cylinder and the frame 27 of the section of a sowing disk coulter 23 to which are attached the front section 5 of the distribution device 3 and the rear section 6 of the distribution device 3, which sowing disc coulters 23, and a section of a bar harrow 25 and parts 13 of the means of support 2 are mounted, consisting of two rear duplicating and packing wheels 24.

### Industrial Application

An agricultural machine, according to the invention can be used for sowing and/or the application of fertilizer, especially for highly productive and accurate sowing and/or the application of fertilizer.

### List of Reference Marks

- 1: hopper
- 2: means of support
- 3: distribution device
- 4: agricultural machine
- 5: section of the distribution device I
- 6: section of the distribution device II
- 7: device for connecting to a towing means
- 8: coupling element I
- 9: coupling element II
- 10: coupling element III
- 11: coupling element IV
- 12: section of the means of support I
- 13: section of the means of support II
- 14: parallelogram linkage
- 15: frame of pretreatment sections
- 16: disk
- 17: side deflector
- 18: frame
- 19: traverse tyres of the pneumatic cylinder
- 20: supporting frame
- 21: disc coulters for fertilizer application
- 22: section of the distribution device III
- 23: disc coulters
- 24: rear duplicating and packing wheels
- 25: harrow
- 26: frame
- 27: frame section of the sowing disc coulters
- 28: disk
- 29: flat segment
- 30: transverse internal wall
- 31: chamber

## Claims

1. An agricultural machine for sowing or the application of fertilizer with at least one longitudinal hopper (1) and at least one central metering device, the longitudinal hopper (1) is a basic supporting part of the whole machine and is arranged to be self-supporting, wherein at its front end is arranged a device (7) for connecting to a towing means and its back end is connected with at least one means (2) of support and at least one distribution device (3), and the longitudinal hopper (1) is arranged to be torsionally rigid, while the longitudinal hopper (1) is composed of flat segments (29) which are solidly connected to each other, and the longitudinal hopper (1) comprises at least one coupling element (8,9,10,11), to which is mounted at least one working part of the agricultural machine (4) and/or a section of the working part of the agricultural machine (4).

2. The agricultural machine for sowing or the application of fertilizer according to claim 1 **CHARACTERISED BY** that the longitudinal hopper (1) comprises at least one transverse interior wall (30).

3. The agricultural machine for sowing or the application of fertilizer according to any of the preceding claims **CHARACTERISED BY** that the longitudinal hopper (1) comprises at least one chamber (31) in which is arranged at least one hopper and at least one metering device for distribution seed and/or fertilizer.

## Patentansprüche

1. Die Landmaschine für die Drillsaat oder Düngemittelanwendung mit mindestens einem Längsbehälter (1) und mindestens einer Beschickungseinrichtung, der Längsbehälter (1) ist der Haupttragteil der ganzen Drillmaschine und ist als selbsttragend konstruiert, wobei an deren vorderen Ende eine Einrichtung (7) für den Anschluss an das Zugmittel angeordnet und deren hinteres Ende mit mindestens einem Stützmittel (2) und mindestens einer Anwendungseinrichtung (3) verbunden ist, und der Längsbehälter (1) als torsionssteif konstruiert ist, während dessen der Längsbehälter (1) aus Flachteilen (29) zusammengebaut wird, die fest miteinander verbunden sind, und der Längsbehälter (1) mindestens einen Verbindungsteil (8,9,10,11) enthält, an dem mindestens ein Arbeitsteil der Landmaschine (4) und/oder eine Sektion dieses Arbeitsteils der Landmaschine (4) befestigt sind.

2. Die Landmaschine für die Drillsaat oder Düngemittelanwendung nach Forderung 1, **ist dadurch gekennzeichnet, dass** der Längsbehälter (1) mindestens eine Querinnenwand (30) enthält.

3. Die Landmaschine für die Drillsaat oder Düngemittelanwendung nach einer der vorherigen Forderungen, **ist dadurch gekennzeichnet, dass** der Längsbehälter (1) mindestens einen Zwischenhohlraum (31) enthält, in dem mindestens ein Füllkasten und eine Trennvorrichtung für die Dosierung von Aussaat und/oder Düngemittel angeordnet sind.

## Revendications

1. La machine agricole pour semer ou pour l'application des engrais comprenant au moins un réservoir longitudinal (1) et au moins un dispositif central de dosage, le réservoir longitudinal (1) est la partie principale porteuse de toute la machine et le réservoir est disposé comme autoporteur, et en même temps, à son bout avant, il est disposé un dispositif (7) de couplage à un moyen de traction, et son bout arrière est assemblé à au moins un moyen d'appui (2) et au moins à un dispositif d'application (3), et le réservoir longitudinal (1) est disposé en tant qu'inflexible pour la torsion, tandis que le réservoir longitudinal (1) est composé des parties plates (29) qui sont mutuellement liées d'une façon fixe, et le réservoir longitudinal (1) comporte au moins une partie d'accouplage (8, 9, 10, 11) à la quelle est fixée au moins une partie de travail de la machine agricole (4), et/ou une section de cette partie de travail de la machine agricole (4).

2. La machine agricole pour semer ou pour l'application des engrais selon la revendication 1, **caractérisé par le fait que** le réservoir longitudinal (1) comporte au moins un cloison transversal intérieur (30).

3. La machine agricole pour semer ou pour l'application des engrais, selon une des revendications précédentes, **caractérisé par le fait que** le réservoir longitudinal (1) comporte au moins un espace creux (31) dans lequel au moins un entonnoir est disposé et au moins un dispositif d'éclaircissage pour le dosage du blé et/ou des engrais.
